(19) Europäisches Patentamt

European Patent Office

Office européen des brevets

(11) **EP 1 319 123 B1**

(12) **FASCICULE DE BREVET EUROPEEN**

(45) Date de publication et mention
de la délivrance du brevet:
**08.12.2010 Bulletin 2010/49**

(51) Int Cl.:
***F02K 9/50*** *(2006.01)*

(21) Numéro de dépôt: **01974393.9**

(86) Numéro de dépôt international:
**PCT/FR2001/002942**

(22) Date de dépôt: **21.09.2001**

(87) Numéro de publication internationale:
**WO 2002/025091 (28.03.2002 Gazette 2002/12)**

(54) **Utilisation d'une composition, procédé d'alimentation, et dispositif pour la pressurisation d'un réservoir à gaz de propulsion**

Verwendung einer Zusammensetzung, Versorgungsverfahren, sowie Vorrichtung zur Druckbeaufschlagung eines Treibstoffsbehälters

Use of a composition, feeding method, and device for pressurizing a propellant tank

(84) Etats contractants désignés:
**AT BE CH CY DE DK ES FI FR GB GR IE IT LI LU MC NL PT SE TR**

(30) Priorité: **22.09.2000 FR 0012089**

(43) Date de publication de la demande:
**18.06.2003 Bulletin 2003/25**

(73) Titulaire: **CENTRE NATIONAL D'ETUDES SPATIALES**
**75001 Paris (FR)**

(72) Inventeurs:
• **GIBEK, Isabelle**
**F-31240 L'UNION (FR)**
• **BAUDET, Philippe**
**F-31830 PLAISANCE DU TOUCH (FR)**

• **SERE PEYRIGAIN, Pierre**
**F-31120 GOYRANS (FR)**

(74) Mandataire: **Poulin, Gérard et al**
**BREVALEX**
**3, rue du Docteur Lancereaux**
**75008 Paris (FR)**

(56) Documents cités:
**GB-A- 2 051 246    US-A- 5 026 259**
**US-A- 5 636 513    US-A- 5 961 074**

• **MAYBEE J; KRISMER D: "A Novel Design Warm Gas Pressurization System - AIAA-98-4014" 34TH AIAA/ASME/SAE/ASEE JOINT PROPULSION CONFERENCE & EXHIBIT, 13 - 15 juillet 1998, pages 1-12, XP002189501 Cleveland, Ohio (USA) cité dans la demande**

EP 1 319 123 B1

## Description

### Domaine technique

La présente invention se rapporte à l'utilisation d'une composition pour pressuriser un réservoir de carburant, à un procédé d'alimentation d'un propulseur en carburant par pressurisation dudit carburant contenu dans un réservoir utilisant ladite composition, ainsi qu'à un dispositif pour la mise en oeuvre de ce procédé.

L'invention s'applique par exemple à des sous-systèmes propulsifs, par exemple à l'hydrazine, de satellites de faible durée de vie.

Elle s'applique également à d'autre fluide à pressuriser et pour d'autres applications par exemple dans des sous-systèmes propulsifs de lanceurs.

Un sous-système propulsif permet au satellite de changer d'orbite, de se maintenir sur une orbite souhaitée à la bonne position, et de contrôler son attitude autour de cette position. Il comprend principalement des réservoirs de carburant et des propulseurs.

### Art antérieur

Dans le cas d'un sous-système à l'hydrazine, le ou les réservoirs (s) sont généralement pressurisés au lancement. Malheureusement, ce procédé présente l'inconvénient qu'en orbite, la pression y diminue au fur et à mesure de la consommation de carburant, ce qui diminue aussi les performances des propulseurs. En outre, le volume de carburant qui peut être stocké dans ces systèmes est limité par le dispositif de pressurisation et les compositions pressurantes utilisées.

Les moyens disponibles actuellement pour fournir de bonnes pressions d'injection du carburant aux propulseurs pendant toute la durée de vie de l'appareil propulsé sont soit de disposer une pompe entre le (ou les) réservoir(s) et les propulseurs, soit de disposer en amont du (ou des) réservoir(s) un système de pressurisation où du gaz tel que de l'azote ou de l'hélium est stocké sous haute pression, et injecté dans le (ou les) réservoir(s) au fur et à mesure de la consommation de carburant.

Ainsi, le document US-A-5 026 259 décrit un dispositif miniaturisé de pressurisation d'un système de propulsion. Le dispositif décrit utilise un fluide stocké à basse pression et mène le fluide à haute pression au moyen de pompes.

Un mélange propane-isobutane est utilisé pour maintenir une pression entre 3 et 10 x $10^5$Pa ( entre 3 et 10 bars) environ dans un réservoir intermédiaire du carburant. Le pressurant et le carburant sont séparés par un piston mobile dans le réservoir.

Le document "A novel design warm Gas pressurisation system", Primex, article de 1998 décrit un système de pressurisation par gaz chaud. Ce système ne comprend pas de gaz pré-pressurisé, il comprend un gaz sous forme liquide constitué d'un mélange hydrazine- MMH. Le mélange est décomposé catalytiquement pour obtenir la pressurisation.

Le dispositif décrit utilise des moyens d'étanchéité métalliques pour isoler le liquide de pressurisation dans un réservoir en titane, un catalyseur. US5636513, GB2051246 et US5961074 divulguent l'état de la technique antérieure.

Malheureusement, aucune de ces compositions, systèmes, procédés et dispositifs ne résout les problèmes précités.

Il apparaît donc un grand besoin de développer de nouveaux systèmes et compositions ne présentant pas les inconvénients précités et permettant d'alimenter des propulseurs à une pression optimale d'injection pendant toute la durée de vie de l'appareil propulsé pour obtenir une meilleure performance.

### Exposé de l'invention

La présente invention a précisément pour but de fournir l'utilisation d'une telle composition, un procédé et un dispositif qui pallient les inconvénients et répondent aux besoins précités. L'invention est définie dans les revendications adjointes, qui sont délimitées par rapport à l'état de la technique antérieure le plus proche US 56 36513, qui divulgue leur préambule respectif.

La composition de pressurisation d'un réservoir d'alimentation d'un propulseur en carburant de la présente invention est constituée d'un système en partie sous forme liquide ayant une pression de vapeur saturante d'environ 5 x $10^5$ Pa à 35 x $10^5$ Pa, par exemple d'environ 5 x $10^5$ Pa à 22 x $10^5$ Pa, à une température d'environ 10°C à 50°C.

Selon l'invention, ladite composition peut être constituée par exemple d'un mélange choisi parmi propane-azote, et propane-éthane

Les inventeurs ont considéré un premier point caractéristique de fonctionnement qui est la fin de la vidange du réservoir en carburant.

En fin de vidange, le volume utile d'un réservoir est totalement occupé par le pressurant. A la température minimale et à la pression finale correspondante, qui est forcément minimale, la composition du pressurant suffit à déterminer son état physique, c'est-à-dire le taux de vaporisation, ainsi que les propriétés physico-chimiques, en particulier la masse volumique de la phase vapeur et éventuellement de la phase liquide.

Pour une masse totale de pressurant donnée, le volume de réservoir étant connu, l'écriture du bilan matière conduit à l'équation (I) suivante :

$$\frac{W \times M_P}{d_P^V(T_{MIN}, P_{MIN})} + \frac{(1-W) \times M_P}{d_P^L(T_{MIN}, P_{MIN})} = V_R$$

avec :

$M_P$     masse de pressurant embarquée ;

$W$     taux de vaporisation massique, rapport de la masse de pressurant à l'état vapeur sur la masse totale de pressurant ;

$V_R$     volume utile du réservoir ;

$T_{MIN}$     température minimale spécifiée ;

$P_{MIN}$     pression finale minimale ;

$d_P^V (T_{MIN}, P_{MIN})$     masse volumique de la vapeur du pressurant à $T_{MIN}$, $P_{MIN}$ ;

$d_P^L (T_{MIN}, P_{MIN})$     masse volumique du liquide pressurant à $T_{MIN}$, $P_{MIN}$.

La température minimale étant toujours spécifiée, cette équation est utilisée pour calculer la pression minimale, la masse ou la composition du pressurant, selon le cas.

Les inventeurs ont considéré un autre point caractéristique de fonctionnement qui est la fin du remplissage, à la température nominale et à la température maximale.

En fin de remplissage, à la température nominale et à la pression correspondante, la masse d'ergol embarquée occupe un volume qui peut être calculé, ce qui permet de déduire la place restante pour le mélange pressurant, dont les propriétés (état physique, masses volumiques liquide et vapeur) sont accessibles dans ces conditions. L'écriture du bilan matière conduit à l'expression (II) ci-dessous :

$$\frac{Mc}{dc(T_{NOM}, P_{NOM})} + Mp \times \left(\frac{W_{NOM}}{d_P^V(T_{NOM}, P_{NOM})} + \frac{(1-W_{NOM})}{d_P^L(T_{NOM}, P_{NOM})}\right) = V_R$$

$$(II)$$

avec :

$M_c$     masse d'ergol embarquée ;

$M_p$     masse de pressurant

$W_{NOM}$     embarquée ; taux de vaporisation massique, défini comme étant la masse vapeur sur la masse totale du pressurant ;

$V_R$     volume utile du réservoir ;

$T_{NOM}$     température nominale spécifiée ;

$P_{NOM}$     pression avant vidange à la température nominale ;

$d_P^V (T_{NOM}, P_{NOM})$     masse volumique de la vapeur du pressurant à $T_{MON}$, $P_{MON}$ ;

$d_P^L (T_{NOM}, P_{NOM})$     masse volumique du liquide pressurant à $T_{MON}$, $P_{MON}$ ;

$dc (T_{NOM}, P_{NOM})$     masse volumique de l'ergol à $T_{NOM}$, $P_{NOM}$.

La température nominale étant toujours spécifiée, cette équation est utilisée pour accéder à la pression nominale, à la masse ou à la composition du pressurant, selon le cas étudié. A la température maximale, la pression correspondante doit être telle que l'équation (II) soit toujours vérifiée.

Le principe de calcul de la masse maximale d'ergol susceptible d'être embarquée repose sur le fait que le volume maximum d'ergol est obtenu si le pressurant est totalement liquide, à la température maximale. On obtient alors l'équation (III) suivante :

$$Mc_{MAX} = (V_R - \frac{Mp}{d_P^L(T_{MAX}, P_{MAX})} \times dc(T_{MAX}, P_{MAX}) \qquad (III)$$

avec :

$V_R$     volume utile du réservoir ;

$Mc_{MAX}$     masse maximale d'ergol susceptible d'être embarquée ;

$T_{MAX}$     température maximale spécifiée ;

$P_{MAX}$     pression maximale susceptible d'être observée dans le réservoir ;

$d_P^L(T_{MAX}, P_{MAX})$     masse volumique du liquide pressurant à $T_{MAX}$, $P_{MAX}$ ;

$dc(T_{MAX}, P_{MAX})$     masse volumique de l'ergol à $T_{MAX}$, $P_{MAX}$.

Selon la nature du problème à résoudre, différents modèles ont ainsi été développés, pour calculer les caractéristiques les plus importantes d'une pressurisation. Il est à noter que quel que soit le modèle, les trois températures, minimale, nominale et maximale doivent être spécifiées.

Dans un modèle à masse d'ergol et masse de pressurant imposées, la masse d'ergol et la masse de chacun des deux composés du mélange pressurant sont fournies. Le modèle calcule la pression de fin de remplissage, à la température nominale ainsi qu'à la température maximale, c'est-à-dire la pression maximale susceptible d'être observée dans le réservoir, puis après vidange, à la température minimale, la pression minimale susceptible d'être observée dans le réservoir.

Dans un modèle à masse d'ergol et composition de pressurant et conditions nominales imposées, la masse d'ergol et la composition du mélange pressurant sont imposées, ainsi que la pression et la température nominales. Le modèle calcule alors la masse de pressurant nécessaire pour satisfaire les conditions nominales imposées, la pression finale minimale, à la température minimale, ainsi que la pression maximale susceptible d'être observée dans le réservoir, à la température maximale, avant vidange.

Dans un modèle à pression finale, composition du pressurant et conditions nominales imposées, la pression finale minimale de fin de vidange étant imposée, ainsi que les conditions nominales, pression et température avant vidange, et la composition du pressurant, le modèle calcule la masse d'ergol embarquée, la masse du pressurant nécessaire et la pression maximale qui pourra être observée dans le réservoir.

Ces différents modèles ont été utilisés pour l'étude des mélanges pressurants de la présente invention. Quand elles ne sont pas précisées, les conditions nominales de pressurisation peuvent être par exemple de 22 bars à la température de 23°C.

La présente invention utilise donc un pressurant stocké en partie sous forme liquide pour assurer la pressurisation d'un réservoir, en remplacement par exemple d'un gaz tel que l'azote ou l'hélium utilisé dans l'art antérieur.

La présente invention se rapporte à l'utilisation d'une composition selon l'invention pour pressuriser un réservoir d'alimentation de propulseurs.

Cette composition peut être par exemple un des mélanges précités de la présente invention.

La présente invention fournit également un procédé d'alimentation d'un propulseur en carburant par pressurisation dudit carburant contenu dans un réservoir, ledit procédé comprenant une étape de remplissage d'une première partie du réservoir d'alimentation en carburant, une étape de remplissage d'une deuxième partie du réservoir d'alimentation d'une composition pressurante selon la présente invention, et une étape d'expulsion du carburant à partir de la première partie du réservoir sous l'impulsion de la pression de ladite composition de pressurisation, la première et la deuxième parties du réservoir étant séparées de manière étanche par une membrane permettant la transmission sans échanges de matières de la pression de la composition de pressurisation au carburant.

Dans le présent texte, les termes "sans échange de matière", tiennent compte d'une faible diffusion du pressurant qui peut avoir lieu de la deuxième à la première partie du réservoir, cette diffusion étant suffisamment faible pour ne pas remettre en cause la pressurisation. Les termes "expulsion" et "vidange" sont équivalents.

La présente invention se rapporte également à un dispositif pour la mise en oeuvre du procédé de la présente invention. Ce dispositif est un réservoir d'alimentation d'un propulseur en carburant utilisable pour alimenter le propulseur en carburant par pressurisation dudit carburant au moyen de la composition de la présente invention, ledit réservoir d'alimentation comprenant un réservoir, une membrane séparant le réservoir en une première et en une deuxième parties, des moyens de remplissage de la première partie du réservoir en carburant à pressuriser et de la deuxième partie du réservoir en composition pressurante selon l'invention, un moyen d'expulsion du carburant de la première partie du réservoir sous l'impulsion de la pression de ladite composition de pressurisation présente dans la deuxième partie du réservoir, et des moyens de commande permettant de réguler la vidange du carburant, la membrane permettant la transmission sans échanges de matières de la pression de la composition de pressurisation au carburant.

La membrane peut être choisie notamment suivant les conditions d'utilisation, c'est à dire par exemple suivant la nature de la composition pressurante, la nature du carburant, la température, la pression etc. Par exemple elle peut être choisie parmi une membrane en éthylène propylène terpolymère (EPDM) compatible avec l'hydrazine, une membrane en nitrile compatible avec le propane et l'éthane liquides, une membrane en caoutchouc par exemple une membrane hypalon (marque de commerce) fournie par la Société BECAP (France), compatible avec le difluorométhane, etc.

La membrane peut être une membrane simple, ou une membrane bi-couche conçue spécialement pour que la compatibilité soit assurée d'une part avec le pressurant et d'autre part avec le carburant.

La membrane peut aussi être une membrane métallique, par exemple de type "accordéon". Ce type de membrane présente l'intérêt supplémentaire de favoriser les échanges thermiques entre le fluide combustible et le pressurant : le pressurant peut alors bénéficier des calories contenues dans la masse de carburant.

La présente invention permet d'alimenter des propulseurs à une pression optimale d'injection pendant toute la durée de vie du satellite, pour obtenir une meilleure performance que les compositions, procédés et dispositifs de l'art antérieur. La pressurisation du carburant étant optimale au cours de la vie du satellite en orbite, les performances des propulseurs sont nettement améliorées. En outre, le volume occupé par le pressurant est plus faible. Ainsi, pour une même quantité de carburant, le volume de stockage est plus faible que celui des dispositifs de l'art antérieur, ou bien, pour un même volume de réservoir qu'un réservoir de l'art antérieur, une mission plus longue peut être accomplie car une plus grande quantité de carburant peut être stockée dans le réservoir grâce à la présente invention. La composition et le procédé de la présente invention ne recourent pas à un chauffage ni à une décomposition des produits pour la pressurisation.

D'autres caractéristiques et avantages apparaîtront encore dans les exemples ci-dessous donnés à titre illustratif et non limitatif en référence aux figures annexées.

**Figures**

- La figure 1 est un schéma d'un mode de réalisation d'un dispositif comprenant un réservoir d'alimentation selon la présente invention,
- la figure 2 est une représentation graphique de l'évolution de la pression maximale dans le réservoir en fonction de la composition du pressurant,
- la figure 3 est une représentation graphique de l'évolution du taux de vaporisation du pressurant selon l'invention à quantité constante entre les températures 23 à 50°C, en fonction de la composition du pressurant,
- la figure 4 est une représentation graphique de l'évolution de la pression finale en fonction de la composition d'un pressurant binaire de la présente invention,
- la figure 5 est une représentation graphique de l'évolution simultanée de la pression finale et de la pression de rosée du binaire en fonction de la composition du pressurant,
- la figure 6 est une représentation graphique montrant les différences d'évolution de la pression dans le réservoir pendant la phase de vidange, en fonction de la composition d'un pressurant de la présente invention,
- la figure 7 est une représentation graphique d'un suivi de la masse de carburant embarquée et de la pression de rosée à 10°C d'un binaire propane/azote selon la présente invention en fonction de la composition de ce dernier,
- la figure 8 est une représentation graphique d'un suivi de la pression d'un pressurant propane/éthane de la présente invention, et de la température de paroi externe du réservoir pendant et après le processus de vidange,
- la figure 9 est une représentation graphique d'un suivi de la pression d'un pressurant propane/éthane selon la présente invention pendant une partie de la vidange en créneau d'un réservoir selon l'invention,
- la figure 10 est une représentation graphique d'un suivi de la pression d'un pressurant difluorométhane, et de la température de paroi externe d'un réservoir selon l'invention pendant et après le processus de vidange, et
- la figure 11 est une représentation graphique d'un suivi de la pression d'un pressurant difluorométhane pendant deux phases de vidange.

**Exemples**

Dans le cadre de la présente invention, et pour tous les essais expérimentaux décrits ci-après, l'hydrazine a été remplacée par de l'eau.

**Exemple 1 : Dispositif selon la présente invention**

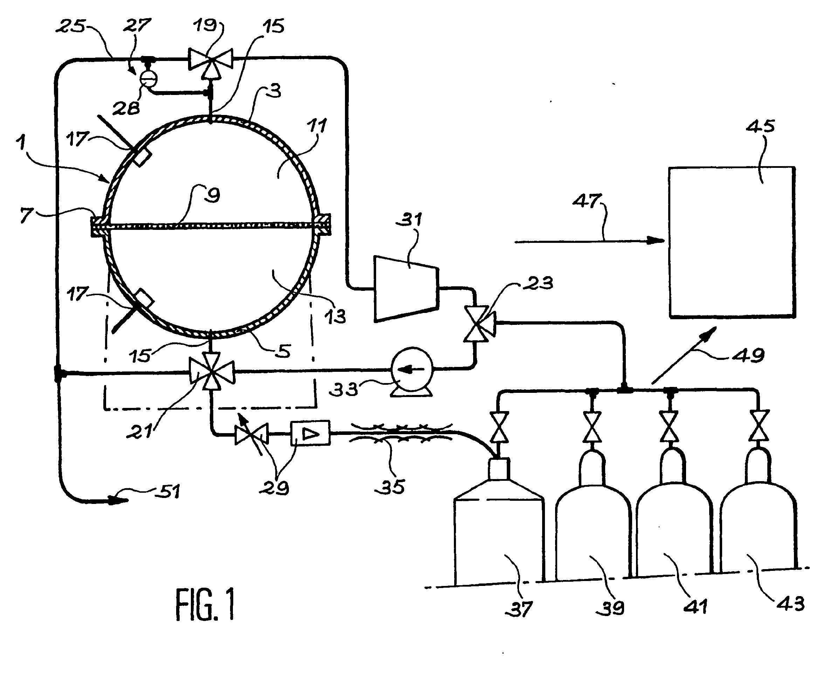

Le dispositif présenté dans cet exemple a été conçu pour vérifier la pressurisation d'un carburant hydrazine avec une composition de pressurisation de la présente invention. La figure 1 annexée présente schématiquement les différents éléments du dispositif. Le réservoir d'alimentation 1 est sphérique. IL est constitué de deux demi-sphères 3 et 5 en inox 304 L, assemblées par des brides 7 boulonnées et séparées par une membrane étanche 9 de manière à former deux chambres 11 et 13. Son volume total est de 42,605 1 et l'épaisseur moyenne de la paroi est de 10 mm. L'ensemble a été calculé selon les normes CODAP 95 pour travailler à une pression de 25 x $10^5$Pa à 50°C et a été éprouvé à 37,5 x $10^5$Pa.

L'étanchéité au niveau des brides 7 est réalisée sur deux bourrelets moulés sur la membrane 9 de séparation entre les deux chambres 11 et 13 avec :

chambre 11 : demi sphère haute, chambre pressurante, et
chambre 13 : demi sphère basse, chambre à combustible.

Chaque demi-sphère est équipée de deux piquages 15, 17, les piquages 15 dans l'axe vertical, ils permettent les entrées du pressurant et du combustible et la mesure de la température, et les piquages 17 placés à 45° permettent de placer des capteurs de pression.

La membrane 9 qui assure la séparation entre la chambre pressurante 11 et la chambre combustible 13 a une épaisseur de 5 mm et un diamètre hors tout de 525 mm. Fabriquée par moulage, elle comporte deux bourrelets toriques (non représentés). Trois types différents de membranes ont été utilisés expérimentalement :

- une membrane éthylène propylène terpolymère (EPDM), retenue notamment en raison de sa compatibilité avec l'hydrazine, carburant utilisé dans les réservoirs de satellite ;
- une membrane en nitrile, plus compatible avec le propane et l'éthane liquides que le matériau en ÉTHYLÈNE PROPYLÈNE TERPOLYMÈRE (EPDM) ;
- une membrane en hypalon (marque de commerce), sorte de caoutchouc naturel, compatible avec le difluorométhane.

Le dispositif comprend en outre des dispositifs de vannes 19, 21 et 23, des conduites étanches 25, une conduite d'évacuation 27 avec un disque de rupture 28, une vanne de régulation et un débitmètre 29, un surpresseur 31, une pompe 33, un dispositif pour pertes de charges 35, un réservoir de combustible 37, une bouteille de pressurant lourd 39, une bouteille de pressurant léger 41, et une bouteille d'azote 43.

Il comprend aussi un système informatique 45 d'enregistrement et de traitement des données. Les flèches 47 et 49 indiquent l'acquisition de ces données, et la flèche 51 la sortie des effluents (carburant et gaz).

Des mesures de température ont été réalisées au moyen de sondes de température à résistance de platine de type Pt 100 (non représentées), gainées inox 316 1 et ayant un diamètre de 3 mm, disposées dans la sphère. Leur précision est garantie à +/-0,03°C. Chaque sonde est reliée à un convertisseur-transmetteur qui délivre une sortie 0-10v transmise aux cartes d'acquisition informatique. Des sondes thermométriques de surface, de type Pt 100 (non représentées), ayant une précision à +/-0,03°C ont également été utilisées.

Ces indications de température permettent de suivre l'évolution thermique dans la sphère et l'extérieure de celle-ci.

Des mesures de pression ont été effectuées sur les lignes d'alimentation grâce à des capteurs et transmetteurs de pression montés sur la ligne d'alimentation en pressurant (non représentés). Ces mesures de pression sont nécessaires pendant le protocole de remplissage du réservoir pour s'assurer de l'état physique dans les canalisations, par exemple, mais ne fait pas l'objet d'une acquisition systématique.

Des chaînes de mesure de pression relative capteur/transmetteur ont également été disposées pour mesurer la pression dans le réservoir. Le capteur est à membrane affleurante (inox 316L). Ces chaînes sont étalonnées suivant les normes BNM-COFRAC entre 0 et 25 x $10^5$Pa, ce qui permet une amélioration de la précision au-delà de +/-0,05% de l'échelle. Les deux pressions font l'objet d'une recopie informatique. Ces chaînes permettent de suivre l'évolution de la pression du système au cours du remplissage et de la vidange.

Des réglages des débits de soutirage ont été réalisés. Trois protocoles de vidange du réservoir ont été testés : vidange ajustée initialement à 2,5 g/s , vidange à débit maximum à ouverture de vanne maximale, et vidange en créneaux débit de 2,5 g/s pendant les temps d'ouverture de vanne.

Pour les premiers essais de vidange, il a été observé une chute anormale du débit de combustible, non conforme à la chute de pression enregistrée dans le réservoir. Le dispositif de vanne 23 comprend une vanne qui assure la perte de charge sur la ligne de soutirage. Elle est pratiquement fermée et sa réponse sort de la plage de linéarité entre le débit et le pourcentage d'ouverture de vanne. La correction apportée au système a consisté à rajouter un tube capillaire (d=1/16" de pouce) de longueur 400 mm pour augmenter la perte de charge sur la ligne et permettre un fonctionnement correct de la vanne. Une dernière expérience, dans ces conditions, a montré une bonne adéquation entre le débit et la chute de pression constatée dans la sphère.

**Exemple 2 : Caractérisation de la membrane Éthylène propylène terpolymère (EPDM)**

La mesure de la masse de la membrane fournit une masse de 1,183 kg.

Le volume de la membrane est égal à 1200 cm$^3$.

La capacité calorifique de la membrane a été mesurée expérimentalement par analyse thermique différentielle (DCS) entre 14 et 67°C. La capacité calorifique de la membrane évolue de 1,625 à 1,832 J/m/K entre les deux bornes de température.

La mesure de la conductivité thermique de la membrane, réalisée à l'ENSIMAC d'Albi, a fourni un résultat moyen de 0,0031 W/m/K, pour des températures comprises entre 10 et 50°C.

Ces différents tests de déformation de la membrane ont été réalisés notamment avec la membrane éthylène propylène terpolymère. Pour ces tests, la demi-sphère supérieure est pressurisée à 2,15 x10$^5$Pa, la membrane épousant parfaitement la forme de la demi-sphère inférieure. La pression est ensuite relâchée par paliers de 0,1 bar pour apprécier la valeur à laquelle la membrane entame une remontée. Le décollement débute quand la pressurisation devient inférieure à 1,4 x10$^5$Pa. La même opération a été réalisée en plaquant la membrane en haut de sphère, et a fourni le même résultat : pour déformer complètement la membrane et lui faire épouser parfaitement la forme de la demi-sphère haute ou basse, il faut appliquer une différence de pression de l'ordre de 0,3 à 0,4 bar seulement.

Pour les autres membranes utilisées ensuite, ces essais ont été à nouveau réalisés et ont fourni des résultats identiques.

Plusieurs essais thermiques ont été effectués avec de l'eau pour évaluer les échanges thermiques à travers la membrane de séparation. Parmi ces essais, par exemple, la demi-sphère haute a été remplie d'eau chaude et la demi-sphère basse d'eau froide, pour mesurer l'échange thermique à travers la membrane. Ces différentes expériences ayant pour objectif de fournir des coefficients d'échanges thermiques expérimentaux, en particulier pour quantifier les phénomènes convectifs. La réalisation de ces expériences thermiques a permis de mettre en évidence que le transfert thermique à travers la membrane est très faible.

Enfin des essais en pression à 22 x 10$^5$ Pa ont permis de vérifier que la membrane était étanche.

**Exemple 3 : Caractéristiques de pressurisation du difluorométhane et de l'ammoniac**

Les caractéristiques de pressurisation du difluorométhane et de l'ammoniac sont présentées dans le tableau (I) ci-dessous. Cette composition ne fait pas partie de l'invention mais représente un état de l'art antérieur.

**Tableau (I)**

| Propriétés des corps purs | Difluorométhane | Ammoniac |
|---|---|---|
| Formule chimique<br>Masse molaire (g/mol) **SATURATION** | $CH_2F_2$<br>52,02 | $NH_3$<br>**17,03** |
| Pression (x10$^5$Pa)<br>à 10°C<br>à 23°C<br>à 50°C | <br>11,0<br>16,0<br>31,5 | <br>6,1<br>9,4<br>20,3 |
| Masse volumique du liquide saturé (Kg/m$^3$)<br>à 23°C<br>à 50°C | <br>965,2<br>835,9 | <br><br>562 |
| Masse volumique de la vapeur saturée (Kg/m$^3$) à 10°C | 28,65 | **4,7** |

(suite)

| Propriétés des corps purs | Difluorométhane | Ammoniac |
|---|---|---|
| rapport $\dfrac{dv_{SAT}^{TMIN}}{dl_{SAT}^{TMAX}}$ * | 0,0343 | **0,00836** |
| * Avec $dv_{SAT}^{TMIN}$ : densité volumique de la vapeur saturée à température minimale $dl_{SAT}^{TMAX}$ : densité volumique du liquide saturé à température maximale | | |

Il est clair que le niveau de la pressurisation pouvant être assuré par le difluorométhane est assez supérieur à celui de l'ammoniac. En revanche, le tableau (I) montre que la masse volumique de la vapeur à saturation de l'ammoniac à 10°C et le rapport des masses volumiques vapeur à saturation à 10°C et liquide à saturation à 50°C sont vraiment très intéressants pour le composé ammoniac.

**Exemple 4 : Caractéristiques de pressurisation de la composition binaire difluorométhane/isobutane**

Les valeurs expérimentales suivantes font apparaître que la composition binaire difluorométhane/isobutane, ne faisant pas partie de la présente invention mais illustrant un état de l'art antérieur, présente les caractéristiques azéotropiques suivantes :

**Tableau II**

| T(°C) | Fraction molaire en difluorométhane dans la composition binaire | P(x10$^5$Pa) |
|---|---|---|
| 28,65 | 0,906 | 19,39 |
| 48,65 | 0,934 | 30,78 |

A titre comparatif, à ces deux températures, la pression de vapeur saturante du difluorométhane pur est respectivement de 18,6 x10$^5$Pa et de 30,54 x10$^5$Pa.

**Exemple 5 : pression maximale pouvant être atteinte dans un réservoir avec une composition binaire propane/azote selon la présente invention**

Cet exemple montre la pression maximale pouvant être atteinte dans le réservoir, avant le début de vidange, si la température atteint une valeur maximale de 50°C, avec une composition binaire propane/azote selon la présente invention.

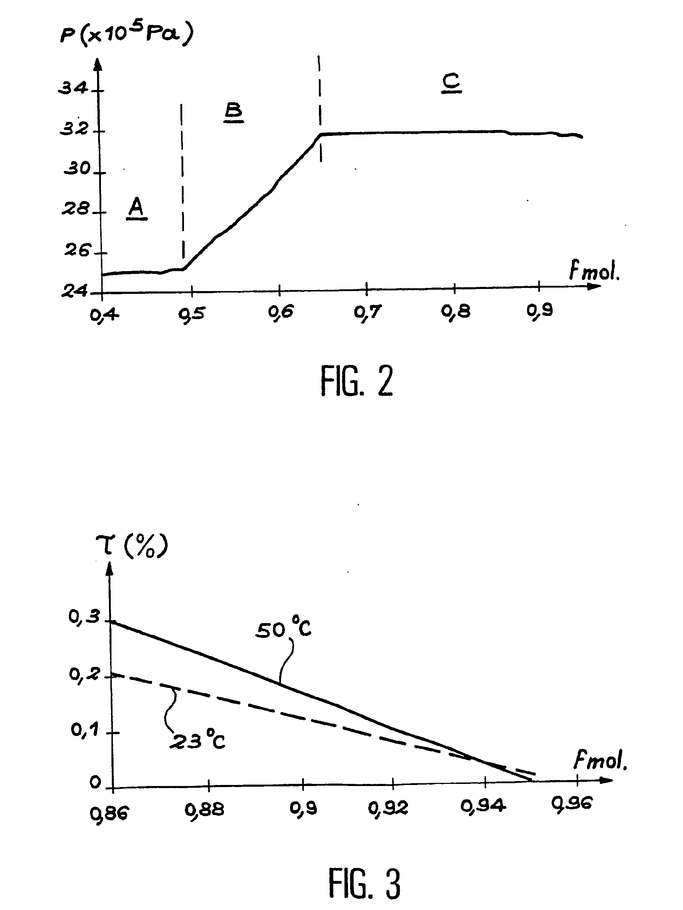

Les résultats obtenus sont présentés sur la figure 2 annexée. Cette figure est une représentation graphique de l'évolution de la pression maximale en pascals dans le réservoir en fonction de la fraction molaire en propane. La masse de carburant, est de 30 kg, et les conditions nominales de pressurisation de 22 x 10$^5$Pa (22 bars) à 23°C.

Trois zones A, B, et C peuvent être identifiées sur la courbe de la figure 2, traduisant un comportement différent du pressurant quand la température évolue de sa valeur nominale (23°C) à sa valeur maximale (50°C), avant le début de la vidange.

Dans la zone de composition A, pour de faibles fractions molaires en propane, la pression maximale reste quasi-constante, à un niveau comparable à ceux obtenus pour une pressurisation à l'azote. En fait, le mélange pressurant reste totalement vapeur entre la température nominale et la température maximale.

Dans la zone B, le pressurant est liquide/vapeur à la température nominale et se vaporise totalement avec l'augmentation de température. La pression maximale obtenue augmente assez vite en fonction de l'augmentation de la fraction molaire en propane.

Dans la zone C, le mélange pressurant est en phase de changement d'état, ce qui maintient la pression à un niveau quasi-constant. Dans cette zone de composition, il y a pourtant deux comportements différents du pressurant, en fonction de la fraction molaire en pressurant lourd.

Afin d'illustrer ce comportement, le graphique de la figure 3 montre l'évolution du taux $\tau$ de vaporisation (en %) de la composition pressurante avant vidange, donc à quantité de pressurant constante, à la température nominale de 23°C et à la température maximale de 50°C, pour des fractions molaires fmol en propane de 0,86 à 0,96.

L'analyse de la figure 3 permet de mettre en évidence un point de croisement entre les deux courbes à fmol égal à 0,94. Avant ce point particulier, c'est-à-dire pour des fractions molaires en propane inférieures à 0,94, le pressurant se vaporise quand la température augmente de 23°C à 50°C. Pour une fraction molaire de propane supérieure à 0,94, le pressurant se liquéfie avec l'augmentation de température, risquant, en cas d'atteinte de l'état totalement liquide, de provoquer de fortes augmentations de pression.

Il semble raisonnable selon la présente invention de fixer comme composition maximale admissible la composition qui conduit à ce changement de sens de la fraction vaporisée avec la température.

**Exemple 6 : influence de la composition d'un mélange propane/azote selon l'invention sur la pressurisation**

La composition pressurante binaire propane/azote a été étudiée pour une masse de carburant embarquée de 30 kg.

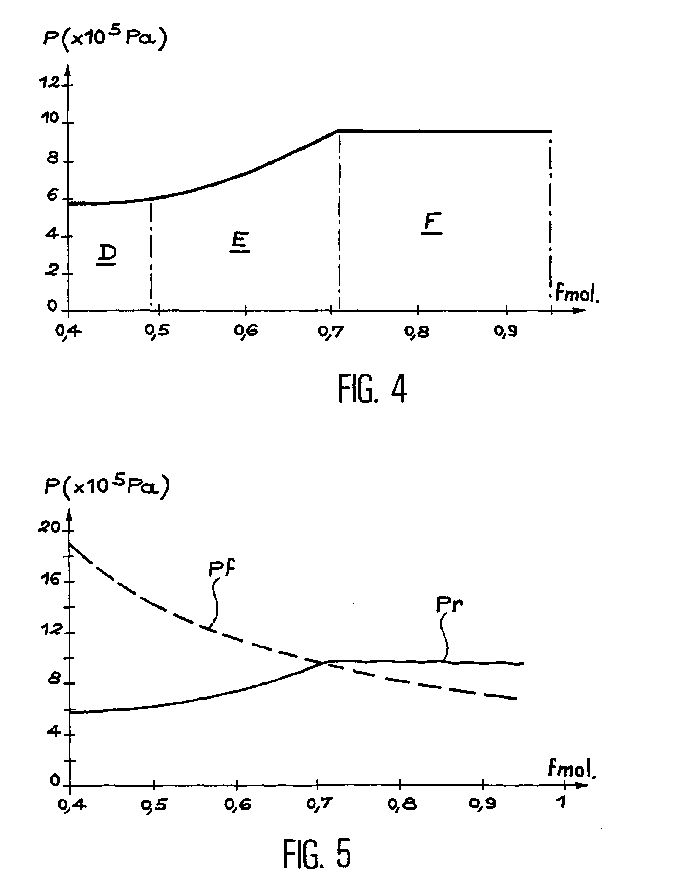

Le graphique de la figure 4 montre l'évolution de la pression finale $P(x10^5Pa)$ à 10°C en fonction de la composition du pressurant en fraction molaire de propane.

Cette courbe peut être décomposée en trois zones D, E, et F dont les caractéristiques sont les suivantes :

La zone D correspond à une faible évolution de la pression finale avec l'augmentation de la fraction molaire en composé lourd du binaire pressurant. Pour ce domaine de composition inférieur à 48% molaire en propane, le pressurant est vapeur dans les conditions nominales de fin de remplissage et la vidange n'est alors qu'une détente de gaz, processus peu sensible à la composition de la vapeur détendue. La pression finale est néanmoins supérieure à celle obtenue avec l'azote, le mélange binaire gazeux présentant un facteur de compressibilité plus intéressant.

La zone E, de 48% à 71% molaire en propane, correspond à une augmentation importante de la pression finale d'une valeur inférieure à $6x10^5Pa$ à $9,5 x10^5Pa$ avec l'augmentation de la fraction molaire en pressurant lourd. Le mélange pressurant est liquide/vapeur au début de la vidange qui se déroule en deux phases, l'une de vaporisation du pressurant, correspondant à la phase pendant laquelle la pression est maintenue quasi-constante dans le réservoir, l'autre étant une détente de gaz, se produisant après que la dernière goutte de pressurant se soit volatilisée. Plus la fraction molaire en composé lourd est importante et plus la phase de changement d'état du pressurant dure longtemps pendant le processus de vidange, ce qui conduit finalement à une augmentation de la pression finale obtenue puisque la détente en gaz est moins importante. Il est également à noter qu'en contrepartie de l'accroissement de la pression finale, l'augmentation de la fraction molaire en composé lourd conduit aussi à une augmentation de la masse de pressurant nécessaire pour assurer la pressurisation. Le mélange pressurant étant plus "lourd", la fraction de liquide devient plus importante dans les conditions nominales de fin de remplissage et il faut par conséquent une masse plus importante pour occuper le volume de la chambre pressurante.

La zone F, pour une fraction molaire en propane supérieure à 71%, correspond à une pression finale qui diminue très légèrement pendant que, parallèlement, la masse de pressurant augmente de façon significative. Le mélange pressurant n'est pas totalement vaporisé en fin de vidange, il reste une certaine quantité de liquide. En fait, plus la proportion de composé lourd dans le mélange s'accroît, plus le réservoir contient une masse liquide inutile, que l'on peut considérer comme un volume "mort" de pressurant.

A l'intersection des zones E et F, la composition est telle que le mélange pressurant est juste totalement vaporisé lorsque la dernière goutte de carburant est soutirée à condition que la vidange se fasse à la température minimale. En d'autres termes, le mélange pressurant atteint sa pression de rosée quand la vidange s'achève.

Le graphique de la figure 5 annexée montre l'évolution simultanée, à la température minimale, de la pression de rosée Pr en Pa du pressurant et la pression finale Pf obtenue en Pa, en fonction de la fraction molaire en propane.

L'analyse de cette courbe montre que le niveau de pression final maximum est atteint pour une masse de pressurant minimale quand la composition du binaire pressurant est telle que le mélange est à son point de rosée en toute fin de vidange.

Cette composition est appelée par la suite "composition d'intérêt", elle correspond à la composition au point de croisement des deux courbes. En supposant que le domaine d'investigation peut s'étendre à tout le domaine de composition couvert par la zone E de la figure 4 pour la recherche du compromis le plus favorable entre masse de pressurant nécessaire et pression finale assurée, il apparaît évident que toute composition correspondant aux zones D ou F ne présente aucun intérêt.

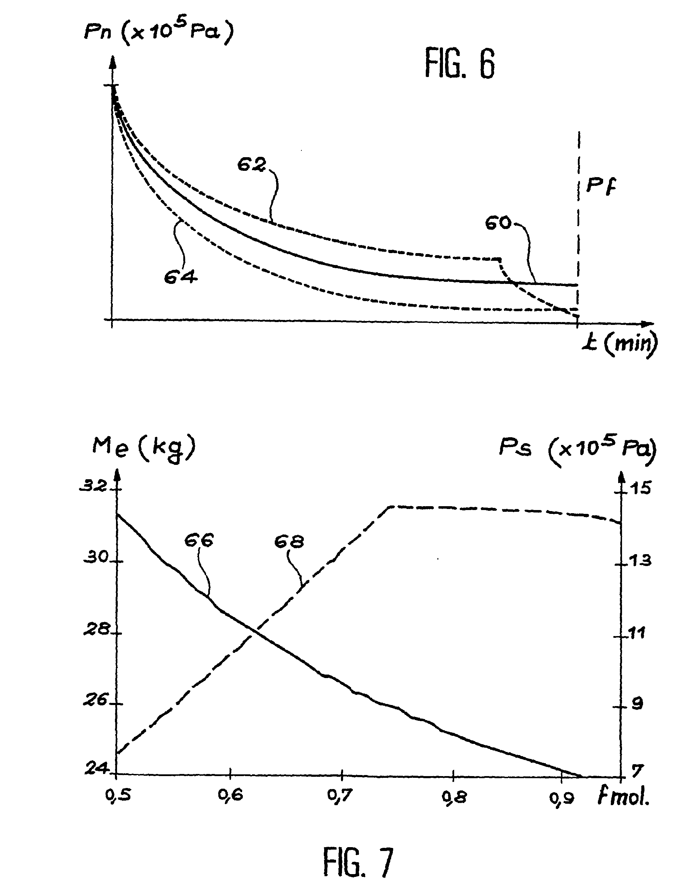

Sur le graphique de la figure 6 annexée est représentée l'évolution théorique de la pression dans le réservoir, pression nominale pendant vidange $Pn(x10^5Pa)$, en supposant une vidange à débit constant en carburant, dans le cas d'une "composition d'intérêt" et de deux compositions voisines de celle-ci.

L'analyse de ce graphique montre que les pressions symbolisées par les courbes 62 et 64 ont une valeur finale inférieure à la pression correspondant à la courbe 60 de la composition d'intérêt, mais pour des raisons différentes. La courbe 62, qui représente le cas d'une fraction molaire en composé lourd, c'est à dire en propane dans cet exemple, inférieure à celle de la composition d'intérêt, est au-dessus de la courbe de référence, courbe 60, pendant la majeure partie du processus de vidange, mais se termine par une décroissance importante correspondant à une détente de gaz lorsque le liquide est vaporisé.

La courbe 64 est en revanche systématiquement en dessous de la courbe de référence 60, tout au long du processus de vidange. La proportion de composé lourd étant plus importante que dans le cas de référence, la pression de changement d'état est plus faible. Pf indique la pression de fin de vidange.

L'influence de la composition du pressurant sur la masse de carburant (Me(kg)) maximale susceptible d'être embarquée a été étudiée, dans le cas d'une pression finale imposée de 9 x10$^5$Pa, à la température minimale de 10°C, le pressurant étant toujours le binaire propane/azote et la fraction molaire évoluant de 0,5 à 0,95 en propane.

La figure 7 annexée montre les résultats obtenus. Sur cette figure, en fonction de la fraction molaire en propane, la courbe 66 représente l'évolution de la pression de saturation du mélange pressurant selon l'invention en Pa à 10°C, et la courbe 68 représente l'évolution de la masse de carburant en kg embarquée.

Cette figure montre bien l'existence d'une composition pour laquelle la masse de carburant embarquée est maximale. En observant la courbe 66 de pression de rosée à la température minimale du mélange pressurant, en fonction de la composition, il apparaît que cette composition est telle que la pression de rosée du binaire est égale à la pression finale imposée. Il est à noter que la composition d'intérêt est modifiée dès que les paramètres de la pressurisation envisagée le sont, c'est la raison pour laquelle la composition d'intérêt présentée sur la figure 7 est naturellement différente de la composition d'intérêt présentée sur la figure 5.

L'application de modèles basés sur les conditions initiales et finales pour une pressurisation avec un mélange propane/azote a montré que la "composition d'intérêt", qui permet de maximiser soit la masse de carburant, soit la pression finale, doit être telle que le mélange atteint son point de rosée en fin de processus de vidange.

Une composition légèrement inférieure à la composition d'intérêt peut s'avérer intéressante car la diminution de la proportion en composé lourd conduit à une diminution de la masse de pressurant nécessaire, ce qui peut éventuellement compenser la diminution de la pression finale ou de la masse de carburant embarquée.

**Exemple 7 : pressurisation d'un réservoir par les mélanges binaires propane/azote, propane/éthane et ammoniac/azote de la présente invention**

Des modèles basés sur les conditions initiales et finales ont été utilisés pour comparer les trois binaires propane/azote, propane/éthane de la présente invention, et ammoniac/azote illustrant l'art antérieur mais ne faisant pas partie de la présente invention, dans deux configurations d'études différentes : à masse de carburant imposée, et à pression finale imposée.

Le réservoir utilisé est celui décrit dans l'exemple 1.

La pressurisation nominale est chaque fois réalisée à 22 x 10$^5$Pa et à 23°C, enfin les bornes de températures sont respectivement fixées à 10 et 50°C.

La pression maximale avant le début de la vidange, à la température maximale est de niveau assez élevé en raison de la forte dépendance de la pression de bulle et de rosée des mélanges binaires à la température de 50°C. Or, la pression nominale étant imposée à 22 x 10$^5$Pa, il faut s'attendre à des pressions de plus de 30 x 10$^5$Pa à la température maximale de 50°C.

Etude à masse de carburant spécifiée

Un modèle pour lequel la masse de carburant est imposée a été utilisé pour chaque binaire afin de déterminer la composition d'intérêt en fonction de la masse de carburant embarquée et pour calculer l'ensemble des paramètres de la pressurisation. Les tableaux III et IV suivants, respectivement pour des masses de carburant embarquées de 10 et 30 kg, rassemblent les résultats obtenus pour les trois binaires étudiés.

**Tableau III : résultats de pressurisation pour une masse de carburant de 10 kg**

| Binaires | Composition d'intérêt (fraction molaire en composé lourd) | Masse de pressurant (g) | Taux de vaporisation à 23°C | Pression finale à 10°C (x10$^5$Pa) | Pression maximale (x10$^5$Pa) | Taux de vaporisation à 50°C |
|---|---|---|---|---|---|---|
| Propane/Azote | 0,45 | 1075 | 1 | 16,2 | 24,6 | 1 |
| Propane/Ethane | 0,25 | 1220 | 1 | 16,8 | 25,3 | 1 |

(suite)

| Binaires | Composition d'intérêt (fraction molaire en composé lourd) | Masse de pressurant (g) | Taux de vaporisation à 23°C | Pression finale à 10°C (x$10^5$Pa) | Pression maximale (x$10^5$Pa) | Taux de vaporisation à 50°C |
|---|---|---|---|---|---|---|
| Ammonia c/ Azote | 0,42 | 691 | 1 | 16,1 | 24,4 | 1 |
| Rappel des résultats avec l'azote | | 759 | 1 | 15,8 | 24,1 | 1 |

Pour une masse de carburant de 10 kg, la pression finale obtenue par les mélanges binaires est légèrement supérieure à celle obtenue à l'azote, en particulier pour le mélange propane/éthane, qui permet un gain de $10^5$ Pa (1 bar).

Pour les deux pressurants utilisant le propane, ce gain en pression finale est obtenu moyennant une masse de pressurant plus importante. Le mélange ammoniac/azote présente l'intérêt, par rapport à une pressurisation à l'azote, d'augmenter la pression finale tout en diminuant la masse de pressurant nécessaire.

Les pressions maximales observées sont du même ordre de grandeur, quel que soit le pressurant, légèrement supérieures à celles observées pour une pressurisation à l'azote.

Il est à noter que les binaires utilisés dans ces conditions restent à l'état de gaz durant tout le processus et que les différences obtenues sont uniquement liées à des différences de propriétés physico-chimiques gaz des pressurants (facteur de compressibilité du gaz).

**Tableau IV : résultats de pressurisation pour une masse de carburant de 30 kg**

| Binaires | Composition d'intérêt (fraction molaire en composé lourd) | Masse de pressurant (g) | Taux de vaporisation à 23°C | Pression finale à 10°C (x$10^5$Pa) | Pression maximale (x$10^5$Pa) | Taux de vaporisation à 50°C |
|---|---|---|---|---|---|---|
| Propane/ Azote | 0,71 | 714 | 0,53 | 9,5 | 31,7 | 0,8 |
| Propane/ Ethane | 0,43 | 982 | 0,39 | 12,6 | 35,6 | 0,74 |
| Ammoniac/ Azote | 0,69 | 358 | 0,5 | 9,4 | 34,4 | 0,86 |
| Rappel des résultats avec l'azote | | 257 | 1 | 5,3 | 24,6 | 1 |

Pour une masse de carburant de 30 kg, le gain en terme de pression finale est beaucoup plus important, en particulier pour le pressurant propane/éthane qui conduit à une pression finale 12,6 x $10^5$Pa bien supérieure aux autres binaires 9,5 x $10^5$ et 9,4 x $10^5$Pa et surtout à l'azote 5,3 x $10^5$Pa.

Les masses de pressurant sont toutes plus élevées que pour une pressurisation à l'azote même si dans le cas du binaire ammoniac/azote, cette différence est moins importante que pour les deux binaires au propane.

Le mélange propane/éthane est celui qui présente le taux de vaporisation le plus faible dans les conditions nominales de fin de vidange. L'effet recherché de vaporisation du binaire liquéfié est donc plus important dans le cas de ce binaire. Les compositions d'intérêt peuvent être considérées sans risque puisque le taux de vaporisation des binaires augmente quand la température augmente de 23 à 50°C, avant le début de vidange. Enfin, il est à noter que les pressions maximales sont plus élevées qu'avec l'azote, comprises entre 31,7 x $10^5$Pa et 35,6 x $10^5$Pa, contre 24,6 x $10^5$Pa seulement pour une pressurisation à l'azote.

De plus, afin d'illustrer l'effet des bornes en température, le tableau V fournit les résultats obtenus pour une masse de carburant imposée de 30 kg, avec une température minimale augmentée à 15°C et une température maximale abaissée à 40°C. Moyennant une augmentation de la masse de pressurant nécessaire, cette modification des températures engendre une augmentation non négligeable pour la pression finale et limite par ailleurs la pression maximale à $3x10^6$Pa pour le binaire qui présente la pression maximale la plus élevée.

**Tableau V : résultats de pressurisation pour une masse de carburant de 30 kg avec bornes de températures modifiées**

| Binaires | Composition d'intérêt (*) | Masse de pressurant (g) | Taux de vaporisation à 23°C | Pression finale à 15°C (x$10^5$Pa) | Pression maximale (x$10^5$Pa) | Taux de vaporisation à 40°C |
|---|---|---|---|---|---|---|
| Propane/ Azote | 0,74 | 803 | 0,47 | 10,45 | 27,7 | 0,59 |
| Propane/ Ethane | 0,44 | 1076 | 0,348 | 14,0 | 30,0 | 0,42 |
| Ammoniac/ Azote | 0,715 | 391 | 0,5 | 10,6 | 29,1 | 0,65 |
| (*) en fraction molaire de pressurant lourd (propane ou ammoniac) | | | | | | |

A masse de carburant imposée, le pressurant qui assure le niveau de pression le plus important est le binaire propane/éthane, moyennant des masses de pressurant mais aussi une pression maximale plus importantes.

Etude à pression finale imposée

Des modèles pour lesquels la pression finale est imposée ont été utilisés pour déterminer la composition d'intérêt et la masse de carburant embarquée, aux pressions finales spécifiées. La pression finale imposée est égale à $5 \times 10^5$Pa, à la température de 10°C.

**Tableau VI : résultats de pressurisation pour une pression finale imposée de $5 \times 10^5$Pa à 10°C.**

| Binaires | Composition d'intérêt (*) | Masse de pressurant (g) | Taux de vaporisation à 23°C | Masse de carburant (kg) | Pression maximale (x$10^5$Pa) | Taux de vaporisation à 50°C |
|---|---|---|---|---|---|---|
| Propane/ Azote | 0,93 | 403 | 0,05 | 38,8 | 35,3 | 0,05 |
| Propane/ Ethane | 0,50 | 343 | 0,02 | 38,8 | 37,3 | 0,05 |
| Ammoniac/ Azote | 0,94 | 159 | 0,05 | 39,4 | 39,7 | 0,05 |
| (*) . en fraction molaire de pressurant lourd (propane ou ammoniac) | | | | | | |

La pression finale imposée est de $5 \times 10^5$Pa, ce qui correspond, pour une pressurisation à l'azote à une masse de carburant 30 kg. Avec les trois mélanges étudiés, la masse embarquée est très nettement supérieure à 30 kg, allant de 38,8 kg à 39,4 kg, pour le meilleur des pressurants à cette pression finale imposée, le binaire ammoniac/azote.

Ces trois mélanges présentent des pressions de rosée à 10°C supérieures à $5 \times 10^5$Pa, quelle que soit la composition du binaire inférieure à la composition maximale. En d'autres termes, la composition d'intérêt quand la pression finale est égale à la pression de rosée du mélange à 10°C ne peut pas être obtenue. De ce fait, la composition la plus favorable est la composition maximale, telle qu'elle a été définie précédemment. Les compositions affichées des binaires sont d'ailleurs toutes les trois des compositions maximales, à la limite de la zone de composition qui a été définie comme risquée. On observe que pour ces compositions limites, le mélange pressurant est presque totalement liquéfié dans les conditions nominales de fin de remplissage et que ce taux de vaporisation reste stable si la température augmente de 23°C à 50°C.

Le pressurant étant presque totalement liquide dans les conditions nominales de fin de remplissage, la propriété importante pour déterminer la masse maximale de carburant susceptible d'être embarquée est la masse volumique liquide des mélanges pressurants, et dans ce domaine, l'ammoniac présente un grand intérêt, qui se traduit par une masse de carburant embarquée plus importante que pour les deux autres binaires.

**Exemple 8 : étude du binaire propane/azote de la présente invention**

Le propane utilisé est fourni par l'Air Liquide, avec une pureté garantie à 99,5%. L'azote utilisé est de l'azote industriel de type U. L'eau utilisée pour remplacer le carburant est issue du réseau disponible sur place.

Une pressurisation à un niveau de $15 \times 10^5$Pa du circuit d'alimentation en propane a permis d'imposer l'état liquide de ce composé dans la canalisation, pour permettre une bonne répétitivité des mesures de masse.

Une membrane en nitrile, compatible avec le propane liquide, ainsi qu'avec l'éthane liquide, a été mise en place. Il est à noter que ce type de membrane n'est pas recommandé en présence d'hydrazine.

Protocole de remplissage

Le protocole expérimental comprend huit étapes, dont sept consacrées à la phase de remplissage en carburant, puis en pressurant.

Les différentes étapes du protocole sont détaillées ci-après :

**Etape 1** : Purge à l'azote de la partie supérieure de la sphère puis légère pressurisation à l'azote de la chambre pressurante pour plaquer la membrane en fond de sphère.

**Etape 2** : Le remplissage du carburant est effectué en utilisant une pompe doseuse. Il est à noter qu'un tirage au vide peut être envisagé avant l'introduction du carburant, pour éviter la contamination du carburant introduit ensuite. Ce tirage au vide n'a pas été réalisé dans le cadre des essais expérimentaux effectués avec de l'eau.

**Etape 3** : L'étape 2 conduit à une compression de la chambre haute. Une dépressurisation de cette chambre est effectuée jusqu'à un niveau de pression de l'ordre de $2 \times 10^5$Pa. Il est à noter que cette étape peut être entamée avant la fin de l'étape 2, si la pression devient très importante dans la chambre haute. Après une phase de repos, correspondant à une phase d'équilibrage en température, les conditions mesurées de température et pression permettent de calculer la masse d'azote dans la chambre haute.

**Etape 4** : Une pressurisation de la canalisation d'alimentation en propane est effectuée à un niveau de $15 \times 10^5$Pa.

**Etape 5** : Après tarage de la balance, la quantité souhaitée de propane est introduite dans le réservoir.

**Etape 6** : Cette phase correspond à l'introduction de la masse souhaitée d'azote, en tenant compte de la masse déjà présente, calculée en fin de l'étape 3.

**Etape 7** : En fin de remplissage, le système est laissé au repos pendant au moins une heure, pour permettre l'équilibrage en température et composition.

**Etape 8** : La vidange est réalisée selon un protocole choisi, soit à ouverture de vanne constante, soit avec des ouvertures de vannes en créneau.

Une série d'expériences de pressurisation a été menée avec le pressurant propane/azote, pour des masses de carburant de 10, 30 et 37,5 kg. Il est à noter que dans cette série expérimentale, les vidanges ont toutes été effectuées à ouverture de vanne constante, le débit initial étant voisin de 2,5 g/s.

Expériences pour les masses de carburant de 37,5 kg

Le tableau (VII) ci-après résume les caractéristiques des manipulations effectuées en utilisant le binaire propane/azote, avec une charge de carburant de 37,5 kg. Pour la masse de carburant embarquée, la composition d'intérêt et la composition maximale telles qu'elles ont été définies dans les exemples 5 et 6 sont obtenues respectivement pour des fractions molaires en propane égales à 0,91 et 0,94.

**Tableau VII : références et caractéristiques principales des expériences réalisées avec le pressurant propane/azote pour 37,5 kg de carburant**

| Référence de l'expérience | Masse de carburant (kg) | Fraction molaire en pressurant lourd | Masse de propane (g) | Masse totale d'azote (g) |
|---|---|---|---|---|
| 418PN302 | 37,527 | 0,85 | 364 | 42 |
| 418PN402 | 37,504 | 0,72 | 178 | 45 |
| 418PN702 | 37,5 | 0,92 | 636 | 37 |
| 418PN802 | 37,502 | 0,93 | 698 | 32 |

Le tableau VIII présente les mesures expérimentales obtenues au début et en fin de vidange (en terme de température et de pression) et les valeurs sont comparées aux résultats théoriques attendus.

**Tableau VIII : références et caractéristiques principales des expériences réalisées avec le pressurant propane/azote pour 37,5 kg de carburant**

| Référence | Température avant vidange (°C) | Pression avant vidange (x10$^5$Pa) | | Température en fin de vidange (°C) | Pression en fin de vidange (x10$^5$Pa) | |
|---|---|---|---|---|---|---|
| Manipulations | mesurée | mesurée | théorique | mesurée | mesurée | théorique |
| 418PN302 | 17,5 | 21,7 | 21,2 | 17,9 | 5,5 | 5,4 |
| 418PN402 | 15,9 | 19,7 | 20,2 | 20,0 | 3,45 | 3,3 |
| 418PN702 | 21,5 | 23,4 | 21 | 17,6 | 7,3 | 8,1 |
| 418PN802 | 19 | 22,9 | 20,0 | 16,9 | 7,1 | 8,4 |

Pour les deux premiers cas 418PN302 et 418PN402, le tableau VIII montre une bonne adéquation entre valeurs expérimentales et valeurs théoriques attendues.

L'écart entre les pressions théoriques et mesurées avant vidange est de l'ordre de 5 x 10$^4$ Pa (0,5 bar). Il est à noter que la pression avant vidange est assez sensible à la masse d'azote. Les pressions de fin de vidange sont conformes aux valeurs attendues, c'est-à-dire relativement faibles.

Par ailleurs, il est à noter que le meilleur niveau de pression final expérimentalement mesuré est obtenu pour le cas 418PN702, ce qui confirme la notion de composition d'intérêt, puisque cet essai a été réalisé à la composition la plus proche de celle-ci.

De plus, on peut également remarquer que la pression théorique attendue en fin de vidange est supérieure pour le cas d'étude 418PN802 que pour le cas d'étude 418PN702, alors que les températures sont voisines et que la composition du cas 418PN702 a été définie comme "optimale". En fait, il faut rappeler que les calculs de composition sont effectués pour une température finale de 10°C. Si la température finale est différente, la composition optimale l'est aussi.

Pour les deux autres expériences avec 37,5 kg de carburant, les résultats obtenus ne sont pas conformes aux valeurs attendues.

Deux hypothèses peuvent expliquer les écarts de pression observés dans les cas expérimentaux 418PN702 et 418PN802 :

La première hypothèse retenue est que l'équilibre nécessaire entre la phase liquide et la phase vapeur du pressurant n'a pas été atteint avant le début de la vidange. La partie de l'azote non solubilisée conduit alors à une pression supérieure à la valeur attendue.

Une deuxième hypothèse consiste à remettre en cause les températures mesurées. L'hypothèse retenue, faute de mieux, selon laquelle les capteurs de paroi externe seraient représentatifs de la température à l'intérieur de l'enceinte génère vraisemblablement une erreur plus importante que prévue. Partant de cette hypothèse, les phénomènes observés avant et après vidange s'expliquent de la façon suivante :

- avant vidange, la compression effectuée sur le pressurant fait augmenter la température de ce fluide à un niveau supérieur à celui affiché par les capteurs de paroi externe, ce qui expliquerait la pression plus élevée ;
- pendant la vidange, la détente du pressurant génère des frigories qui conduisent à un refroidissement du pressurant que les capteurs de paroi externe ne perçoivent que partiellement ce qui expliquerait alors la différence entre la pression mesurée et la pression théorique attendue. L'équilibre thermique n'est finalement atteint qu'après la fin de la vidange du réservoir.

Expériences pour une masse de carburant de 30 kg

Le temps d'équilibrage avant vidange a été augmenté pour s'affranchir au moins de la première hypothèse mentionnée ci-dessus. Les compositions d'intérêt et maximale sont respectivement en fraction molaire en propane de 0,72 et 0,94 pour une masse de carburant embarquée de 30 kg. Les trois expériences réalisées avec une masse de carburant de 30 kg sont résumées dans le tableau IX ci-après.

**Tableau IX : références et caractéristiques principales des expériences réalisées avec le pressurant propane/ azote pour 30 kg de carburant**

| Référence de l'expérience | Masse de carburant (kg) | Fraction molaire en pressurant lourd | Masse de propane (g) | Masse totale d'azote (g) |
|---|---|---|---|---|
| 418PN1002 | 30,007 | 0,46 | 212 | 159 |
| 418PN1022 | 30,007 | 0,68 | 578 | 173 |
| 418PN1402 | 30,005 | 0,75 | 710 | 148 |

Le tableau X présente les mesures expérimentales obtenues au début et en fin de vidange en terme de température et de pression et les valeurs sont comparées aux résultats théoriques attendus.

**Tableau X : références et caractéristiques principales des expériences réalisées avec le pressurant propane/ azote pour 30 kg de carburant**

| Référence | Température avant vidange | Pression initiale (avant vidange) ($x10^5Pa$) | | Température de paroi externe en fin de vidange | Pression finale (fin de vidange) ($x10^5Pa$) | |
|---|---|---|---|---|---|---|
| Manipulations | mesurée (°C) | mesurée | théorique | mesurée | mesurée | théorique |
| 418PN1002 | 16 | 21,1 | 20,9 | 21,8 | 6,8 | 6,6 |
| 418PN1022 | 21 | 21,3 | 21,6 | 18,5 | 10,4 | 10,7 |
| 418PN1402 | 18 | 20,5 | 20,6 | 17 | 10,3 | 10,8 |

Avant vidange, les problèmes de pression ont été résolus par la phase d'équilibrage prolongée. D'une part, l'équilibre se fait mieux entre les phases liquide et vapeur du pressurant, et d'autre part, l'équilibre thermique est sans doute meilleur, rendant les capteurs de paroi externe plus représentatifs de la température interne du réservoir.

Tout au long de la vidange en revanche, la pression mesurée est inférieure à la pression théorique, semblant confirmer l'hypothèse énoncée précédemment concernant la représentativité des capteurs de température, au niveau de la paroi externe du réservoir.

Il est à noter que le meilleur niveau final est obtenu pour le cas 418PN1022, ce qui confirme la notion de composition d'intérêt.

Expérience pour une masse de carburant de 10 kg

Le tableau ci-dessous présente les conditions de l'expérience réalisée pour une masse de carburant de 10 kg, pour laquelle une composition très proche de la composition d'intérêt, égale à 0,45 en fraction molaire de propane, a été retenue.

**Tableau XI : référence et caractéristiques principales de l'expérience réalisée avec le pressurant propane/ azote pour 10 kg de carburant**

| Référence de l'expérience | Masse de carburant (kg) | Fraction molaire en pressurant lourd | Masse de propane (g) | Masse totale d'azote (g) |
|---|---|---|---|---|
| 418PN1102 | 10,007 | 0,46 | 614 | 475 |

Le tableau XII présente les mesures expérimentales obtenues au début et en fin de vidange (en terme de température et de pression) et les valeurs sont comparées aux résultats théoriques attendus.

**Tableau XII : référence et caractéristiques principales de l'expériences réalisée avec le pressurant propane/ azote pour 10 kg de carburant**

| Référence | Température avant vidange | Pression initiale (avant vidange) (x10$^5$Pa) | | Température de paroi externe en fin de vidange | Pression finale (fin de vidange) (x10$^5$Pa) | |
|---|---|---|---|---|---|---|
| Manipulations | mesurée (°C) | mesurée | théorique | mesurée (°C) | mesurée | théorique |
| 418PN1102 | 17 | 20,8 | 20,8 | 16 | 15,4 | 16,1 |

Pour l'expérience à 10 kg de carburant embarqué, le point nominal avant vidange est tout à fait conforme à la théorie. En revanche, une fois encore, la pression finale mesurée est inférieure de 0,7 x 10$^5$Pa à la valeur théoriquement attendue, à la température mesurée.

La première indication concernant cette série d'essais est que les valeurs théoriques et expérimentales sont bien conformes, au moins avant le début de vidange. L'expérience a montré la difficulté de mesurer exactement les températures à l'intérieur des deux chambres du réservoir, ce qui conduit à une incertitude sur la température finale. En d'autres termes, la température étant certainement inférieure à celle mesurée à l'extérieur du réservoir, les pressions mesurées sont vraisemblablement en adéquation avec les modèles de calcul.

En tout état de cause, l'expérience a démontré l'utilisation de la composition de pressurisation de la présente invention.

On remarque que la pression finale est d'autant plus élevée que la composition du pressurant est proche de la composition définie comme la plus intéressante.

**Exemple 9 : Etude du binaire propane/éthane**

Le propane N25 est fourni par la société l'Air Liquide, qui garantit une pureté de 99,5%.

L'éthane N24 est également fourni par la société l'Air Liquide. Sa pureté est garantie à 99,4.

L'eau utilisée pour les essais expérimentaux est issue du réseau disponible sur place.

Protocole de remplissage

ETAPE 1 : Remplissage de la chambre inférieure avec 40,405 litres d'eau pour occuper le volume total de la sphère et chasser le maximum d'azote côté pressurant.

ETAPE 2 : Remplissage de la chambre supérieure avec le propane tout en vidangeant le carburant de la chambre inférieure.

ETAPE 3 : Introduction de la quantité d'éthane nécessaire.

ETAPE 4 : Alimentation en eau par la pompe 33. L'alimentation est rapide jusqu'à 95% de la charge souhaitée, les derniers pourcentages étant introduits très lentement, en environ 5 à 6h, pour permettre au mélange de s'équilibrer et pour ne pas dépasser la pression admissible dans la sphère.

ETAPE 5 : Phase de repos pour atteindre l'équilibrage du système.

ETAPE 6 : Démarrage de la vidange.

Les tableaux ci-dessous récapitulent les principales caractéristiques des essais entrepris.

Expériences préliminaires

**Tableau XIII : références et caractéristiques principales des expériences réalisées avec le pressurant propane/éthane**

| Référence de l'expérience | Masse de carburant (kg) | Fraction molaire en pressurant lourd | Masse de propane (g) | Masse totale d'éthane (g) |
|---|---|---|---|---|
| 418PE2102 | 30 | 0,64 | 563 | 215 |

(suite)

| Référence de l'expérience | Masse de carburant (kg) | Fraction molaire en pressurant lourd | Masse de propane (g) | Masse totale d'éthane (g) |
|---|---|---|---|---|
| 418PE2202 | 30 | 0,43 | 484 | 440 |
| 418PE0603 | 37,5 | 0,55 | 273 | 152 |
| 418PE0803 | 37,536 | 0,5 | 218 | 146 |
| 418PE1403 | 30,2 | 0,44 | 484 | 405 |
| 418PE1603 | 10,0 | 0,27 | 406 | 748 |
| 418PE2403 | 37.5 | 0,53 | 413 | 250 |

**Tableau XIV : références et caractéristiques principales des expériences réalisées avec le pressurant propane/éthane**

| Référence | Température avant vidange | Pression initiale (avant vidange) (x10$^5$Pa) | | Température de paroi externe en fin de vidange | Pression finale (fin de vidange) (x10$^5$Pa) | |
|---|---|---|---|---|---|---|
| Manipulations | mesurée (°C) | mesurée | théorique | mesurée (°C) | mesurée | théorique |
| 418PE2102 | 19,2 | 21,6 | 18,9 | 18,1 | 10,4 | 10,5 |
| 418PE2202 | 19,8 | 21,8 | 22,1 | 16,9 | 11,0 | 13,5 |
| 418PE0603 | 17 | 17,9 | 18,3 | 18 | 5,05 | 5,8 |
| 418PE0803 | 14,0 | 17,1 | 18,2 | 17,8 | 5,6 | 5,6 |
| 418PE1403 | 19,6 | 20,3 | 19,8 | 16 | 10,8 | 12,1 |
| 418PE1603 | 17,6 | 20,2 | 20,1 | 16,4 | 16,2 | 16,3 |
| 418PE2403 | 17,35 | 19,4 | 19,1 | 16,6 | 6,35 | 9,4 |

Il est à noter que la pression avant vidange du cas 418PE2102 indique que l'équilibrage n'a pas été atteint avant le début de la vidange, pour cette expérience.

Les résultats de ces différents essais sont cohérents avec les résultats obtenus pour le mélange propane/azote avec toutefois des niveaux de pression légèrement supérieurs.

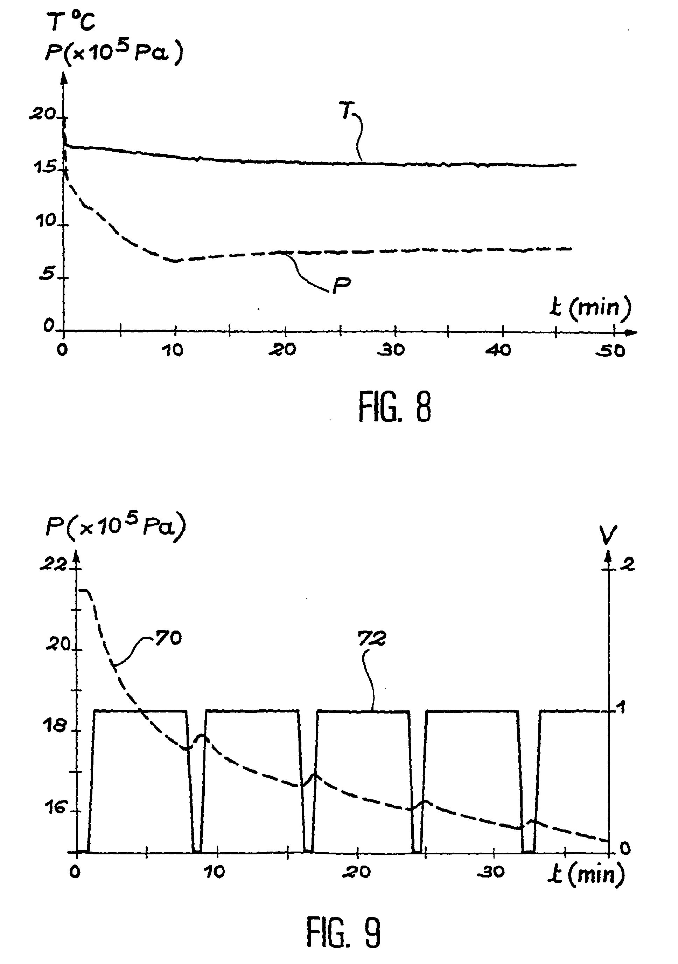

Les résultats montrent également des écarts entre pression finale théorique et pression finale mesurée, écarts qui sont dus aux phénomènes précédemment évoqués. Pour corroborer l'hypothèse de non-représentativité de la température de paroi externe, le cas d'étude 418PE2403 a été étudié pendant une durée supérieure à la durée de vidange. Le graphique de la figure 8 présente simultanément l'évolution de la pression en Pa dans le réservoir pendant et après le processus de vidange, courbe P, et de la moyenne des mesures de températures en degrés celsius effectuées par les capteurs de paroi externe pendant mais aussi après la durée de la vidange, courbe T, en fonction du temps en minutes. La vidange dure seulement une dizaine de minutes car le débit imposé est assez important : 15 g/s.

Pendant le processus de vidange, la pression P diminue assez rapidement. Après la fin de la vidange, la pression à l'intérieur du réservoir remonte, alors que, dans le même temps, la mesure de température T du capteur de paroi externe reste relativement stable. Cette courbe montre bien que la température de paroi externe n'est pas représentative de la température du pressurant, à l'intérieur du réservoir.

Influence des débits de vidange

Les résultats suivants ont été obtenus :

**Tableau XV : références et caractéristiques principales des expériences réalisées pour tester l'influence du débit de vidange sur le comportement de la pression dans le réservoir**

| Référence de l'expérience | Masse de carburant (kg) | Fraction molaire en pressurant lourd | Masse de propane (g) | Masse totale d'éthane (g) |
|---|---|---|---|---|
| 418PE1303 | 37,498 | 0,53 | 412 | 247 |
| 418PE2003 | 37,5 | 0,53 | 413 | 250 |
| 418PE2403 | 37,5 | 0,53 | 413 | 250 |

**Tableau XVI : Résultats en fonction des protocoles de vidange choisis**

| Référence | Température avant vidange | Pression initiale (avant vidange) (x10$^5$Pa) | | Température de paroi externe en fin de vidange | Pression finale (fin de vidange) (x10$^5$Pa) | |
|---|---|---|---|---|---|---|
| Manipulations | mesurée (°C) | mesurée | théorique | mesurée (°C) | mesurée | théorique |
| 418PE1303 | 18,7 | 19,5 | 19,55 | 16,3 | 8,2 | 9,4 |
| 418PE2003 | 19 | 21,4 | 19,6 | 18,2 | 8,7 | 9,5 |
| 418PE2403 | 17,4 | 19,4 | 19,1 | 16,6 | 6,35 | 9,4 |

La pression avant vidange du cas 418PE2003 indique que l'équilibrage n'a pas été atteint avant le début de la vidange, pour cette expérience. Les pressions finales sont obtenues pour des essais expérimentaux qui ne diffèrent que par le protocole de vidange choisi :

- Pour le cas 418PE1303, la vidange est effectuée avec un débit continu, à ouverture de vanne constante, le débit initial étant réglé à 2,5 g/s. La vidange dure 282 minutes et la pression finale mesurée est égale à 8,2 x 10$^5$Pa pour une température de capteur externe égale à 16,3°C.
- Pour le cas 418PE2003, la vidange est effectuée en créneau. Le débit de vidange est de 2,5 g/s, quand la vanne est ouverte, la durée totale de vidange est égale à 386 minutes. La pression finale mesurée est égale à 8,7 x10$^5$Pa à la température de paroi externe de 18,2°C.
- Pour le cas 418PE2403, la vidange est effectuée à un débit très fort, la vanne de réglage de débit étant totalement ouverte. La vidange dure seulement une dizaine de minutes et la pression finale mesurée est seulement de 6,35 x10$^5$Pa, pour une température de 16,6°C.

Après analyse de ces résultats, il est clair que plus la vidange est longue, plus la pression finale expérimentale est élevée. En effet, plus la vidange dure longtemps, plus le système a le temps de s'équilibrer en température grâce aux échanges thermiques avec le milieu extérieur ce qui se traduit par une baisse de pression moins marquée.

Le graphique de la figure 9 annexée présente, en fonction du temps en minutes, l'évolution de la pression en Pa, courbe 70, pendant une partie de la vidange en créneau, courbe 72, par l'ouverture de vanne V.

On observe une remontée de la pression, due à l'équilibrage en température du système, dès que la vidange s'arrête. Les temps de repos sont assez courts entre deux tirs mais suffisent pour conduire à une différence de pression finale, comme observé ci-dessus.

**Exemple 10 : Etude du pressurant difluorométhane** illustrant l'état de l'art antérieur mais ne faisant pas partie de la présente invention

Le difluorométhane, livré par la société Dehon présente une pureté supérieure à 99,8%, les impuretés étant également des fluorocarbonés.

L'eau utilisée pour les essais expérimentaux est l'eau du réseau disponible sur place.

Le difluorométhane est alimenté à partir d'une bouteille à la pression de saturation du produit. Le niveau de pression souhaitée dans la sphère implique de passer par le compresseur et pour éviter les problèmes de répétitivité sur les masses entrées, la partie de canalisation comprise entre le compresseur et la vanne d'admission de la sphère a été préalablement pressurisée pour s'assurer de l'état liquide du fluorométhane.

La membrane de séparation utilisée dans cette partie est une membrane en Hypalon (marque de commerce) sorte de caoutchouc, qui est compatible avec les fluorométhanes. Cependant, il est à noter que l'Hypalon n'est pas compatible avec l'hydrazine.

L'évacuation des gaz est raccordée à un réservoir de récupération pour éviter toute pollution atmosphérique avec le fluorométhane. Ce réservoir a ensuite été récupéré par la société commercialisant les fluorométhanes.

Au cours du remplissage, la température mesurée dans la canalisation d'entrée du fluorométhane descend très rapidement. Le chargement de la chambre pressurante a donc été réalisé en plusieurs temps, en attendant entre chaque opération que le système revienne à une température proche de la température ambiante.

Le protocole expérimental comprend les étapes suivantes :

ETAPE 1 : Remplissage total de la chambre inférieure avec de l'eau (volume total de la sphère) pour chasser le maximum d'azote du côté de la chambre pressurante.

ETAPE 2 : Remplissage de la chambre supérieure en difluorométhane avec vidange simultanée de l'excès de carburant. Le remplissage s'effectue en plusieurs fois pour éviter un refroidissement trop important du système.

ETAPE 3 : Temps d'attente pour équilibrage du système.

ETAPE 4 : Vidange du réservoir selon un protocole choisi.

La masse "optimale" de pressurant pour le réservoir utilisée est égale à 1157 grammes. L'expérience 418FR604 est menée avec 499 grammes de pressurant seulement de façon à démontrer la nécessité des 1157 grammes utilisés dans les quatre expériences suivantes. Le niveau de pression maintenu par le pressurant difluorométhane ne dépend pas de la masse de carburant embarquée, tant qu'elle reste inférieure à la valeur maximale susceptible d'être embarquée, mais uniquement de la température, c'est pourquoi une seule masse de carburant 30 kg a été étudiée dans la série expérimentale relative au difluorométhane.

**Tableau XVII : références et caractéristiques principales des expériences réalisées avec le pressurant difluorométhane**

| Référence de l'expérience | Masse de carburant (kg) | Masse de difluorométhane en grammes |
|---|---|---|
| 418FR604 | 30,004 | 499 |
| 418FR1004 | 30,009 | 1157 |
| 418FR1104 | 30,004 | 1157 |
| 418FR1404 | 30,005 | 1157 |

Les trois premiers essais ont été réalisés à ouverture de vanne constante, le débit initial étant réglé à 2,5 g/s environ.

Le quatrième essai est réalisé en deux étapes :

- Pour la vidange des 10 premiers kg de carburant, le débit réglé est très faible, de l'ordre de 0,2 g/s.
- Pour les 20 kg restants, le débit est rétabli à un niveau de 2,5 g/s environ.

Les résultats obtenus sont présentés dans le tableau ci-après et sont comparés aux valeurs théoriques calculées.

**Tableau XVIII : références et caractéristiques principales des expériences réalisées avec le pressurant difluorométhane**

| Référence | Température avant vidange | Pression initiale (avant vidange) (x10$^5$Pa) | | Température de paroi externe en fin de vidange | Pression finale (fin de vidange) (x10$^5$Pa) | |
|---|---|---|---|---|---|---|
| Manipulations | mesurée (°C) | mesurée | théorique | mesurée (°C) | mesurée | théorique |
| 418FR604 | 12,75 | 12,1 | 12,05 | 11,4 | 5,5 | 5,4 |
| 418FR1004 | 17,6 | 13,85 | 13,9 | 15,75 | 9,55 | 11,45 |
| 418FR1104 | 16,6 | 13,6 | 13,5 | 14,8 | 9,5 | 11,4 |

(suite)

| Référence | Température avant vidange | Pression initiale (avant vidange) (x10^5Pa) | | Température de paroi externe en fin de vidange | Pression finale (fin de vidange) (x10^5Pa) | |
|---|---|---|---|---|---|---|
| Manipulations | mesurée (°C) | mesurée | théorique | mesurée (°C) | mesurée | théorique |
| 418FR1404 | 19 | 14,5 | 14,4 | 15,8 | 10,54 | 11,5 |

L'essai 418FR604 fournit des résultats conformes aux valeurs calculées. La pression finale est faible car la masse de pressurant embarquée n'est pas suffisante pour assurer une pression finale au moins égale à la pression de saturation du difluorométhane à 10°C, égale à 11 x10^5Pa. Pour garantir une pression finale de ce niveau, il faut embarquer 1157 grammes de difluorométhane. Les essais réalisés avec cette masse de pressurant sont présentés ci-après.

L'essai 418FR1004 fournit avant vidange des valeurs cohérentes entre la température et la pression mesurées, la pression mesurée est bien la pression de saturation du corps pur à la température mesurée. En fin de vidange, en revanche, la pression finale est de 2 x10^5Pa inférieure à la pression théorique calculée.

Cet essai a été reproduit en continuant l'acquisition des mesures longtemps après la fin de la vidange. Les résultats de la vidange sont tout à fait similaires à l'essai 418FR1004, mais l'acquisition de la pression et de la température après la fin de la vidange fournit des informations complémentaires tout à fait intéressantes.

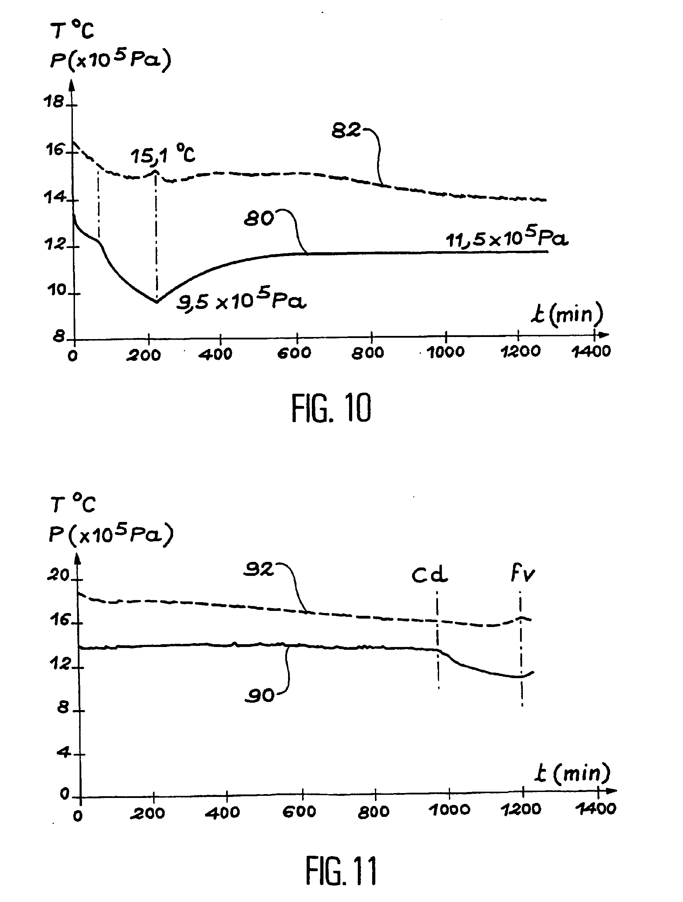

Le graphique de la figure 10 présente, en fonction du temps, l'évolution simultanée de la pression en Pa, courbe 80, et de la température moyenne des capteurs de paroi de la demi-sphère haute en °C, courbe 82.

La première phase de la vidange présente un comportement conforme à la théorie, la pression chutant légèrement, en accord avec la diminution progressive de la température mesurée sur la paroi externe du réservoir. Pendant cette première phase de la vidange, le pressurant est peu vaporisé et le volume de chambre pressurante est faible, si bien que la surface interne du réservoir correspondant à la chambre pressurante est bien "mouillée". L'échange thermique entre le fluide pressurant et la paroi du réservoir se fait de façon correcte et le capteur de paroi externe fournit une valeur de température voisine de la température réelle du pressurant.

Dans la deuxième phase de la vidange, en revanche, les mesures de température et de pression ne sont pas cohérentes entre elles, la pression continuant à diminuer tandis que la température se stabilise avant de remonter. En fait, le pressurant est beaucoup plus vaporisé et le volume de chambre pressurante a également augmenté. Ces changements diminuent fortement la surface mouillée de la paroi interne du réservoir, qui est en contact essentiellement avec la phase vapeur du pressurant, le liquide étant plutôt réparti sur la surface de la membrane. Les capteurs de paroi externe ne rendent à ce moment là absolument pas compte de la température réelle du liquide pressurant. La phase après vidange confirme la non-représentativité de la mesure de température, puisque la mesure de température diminue, alors que la pression remonte au niveau théorique attendu de 11,5 x10^5Pa. Cette courbe montre à l'évidence que la température mesurée au niveau de la paroi externe ne rend pas compte de la température réelle du pressurant dans le réservoir, pendant le processus de vidange. Il est à noter qu'au moment où la pression de la chambre pressurante est mesurée à 9,5 x10^5Pa, en fin de vidange, la température régnant dans le réservoir est de 5°C , valeur de la température de saturation à la pression mesurée dans le réservoir, alors que le capteur de paroi externe mesure une température de 15,1°C.

L'essai 418FR1404, réalisé en deux phases, a pour but d'étudier le changement de comportement du système au moment du changement de débit imposé de 0,2 g/s à 2,5 g/s, quand 10 kg de carburant ont été vidangés. La figure 11 présente, en fonction du temps en minutes, l'évolution simultanée de la pression en Pa, courbe 90, et de la température mesurée au cours des deux phases de la vidange en °C, courbe 92. Sur cette figure, Cd indique le changement de débit, et $F_v$ la fin de la vidange du réservoir.

Ces essais mettent encore clairement en évidence la non-représentativité des mesures de température au niveau de la paroi externe du réservoir, quand le débit de vidange est important et que la surface de contact entre la partie liquide du pressurant et la paroi du réservoir est peu importante.

Ces essais effectués au difluorométhane confirment également la nécessité d'apporter de la chaleur au système de pressurisation pendant la vidange pour éviter des chutes importantes de température dans le réservoir.

Les essais expérimentaux de mise en oeuvre de la présente invention présentés dans ces exemples ont montré que les pressions mesurées dans l'enceinte sont conformes aux valeurs calculées.

**Revendications**

1.   Utilisation pour pressuriser un réservoir (1) d'alimentation d'un propulseur en carburant d'une composition constituée d'un système en partie sous forme liquide ayant une pression de vapeur saturante d'environ 5 x 10$^5$ à 35 x 10$^5$ Pa à une température d'environ 10 à 50°C, **caractérisée en ce que** cette composition est constituée d'un mélange propane-azote ou propane-éthane.

**2.** Procédé d'alimentation d'un propulseur en carburant par pressurisation dudit carburant contenu dans un réservoir, ledit procédé comprenant :

- une étape de remplissage d'une première partie (13) du réservoir d'alimentation (1) en carburant,
- une étape de remplissage d'une deuxième partie (11) du réservoir d'alimentation (1) avec une composition pressurante constituée d'un système en partie sous forme liquide ayant une pression de vapeur saturante d'environ 5 x 10$^5$ à 35 x 10$^5$ Pa à une température d'environ 10 à 50°C, et
- une étape d'expulsion du carburant à partir de la première partie (13) du réservoir (1) sous l'impulsion de la pression de ladite composition de pressurisation,

la première (13) et la deuxième (11) parties du réservoir (1) étant séparées de manière étanche par une membrane (9) permettant la transmission sans échanges de matières de la pression de la composition de pressurisation au carburant, **caractérisé en ce que** ladite composition est constituée d'un mélange propane-azote ou propane-éthane.

**3.** Réservoir (1) d'alimentation d'un propulseur en carburant utilisable pour alimenter le propulseur en carburant par pressurisation dudit carburant au moyen d'une composition de pressurisation, ledit réservoir d'alimentation comprenant :

- un réservoir (1),
- une membrane (9) séparant le réservoir en une première (13) et en une deuxième (11) parties, ladite membrane (9) étant choisie parmi une membrane en éthylène propylène terpolymère, une membrane en nitrile, une membrane en caoutchouc et une membrane métallique,
- ladite deuxième partie (11) étant remplie d'une composition pressurante constituée d'un système en partie sous forme liquide ayant une pression de vapeur saturante d'environ 5 x 10$^5$ à 35 x 10$^5$ Pa à une température d'environ 10 à 50°C,
- des moyens (33, 31) de remplissage de la première partie (13) du réservoir en carburant à pressuriser et de la deuxième partie (11) du réservoir en composition pressurante constituée d'un système en partie sous forme liquide ayant une pression de vapeur saturante d'environ 5 x 10$^5$ à 35 x 10$^5$ Pa à une température d'environ 10 à 50°C,
- un moyen d'expulsion du carburant de la première partie (13) du réservoir (1) sous l'impulsion de la pression de ladite composition de pressurisation présente dans la deuxième partie (11) du réservoir (1), et
- des moyens de commande (21) permettant de réguler la vidange du carburant,

la membrane (9) permettant la transmission sans échanges de matières de la pression de la composition de pressurisation au carburant, **caractérisé en ce que** ladite composition est constituée d'un mélange propane-azote ou propane-éthane.


**Claims**

**1.** Use for pressurising a propulsion unit supply tank (1) of a composition composed of a system partly in liquid form with a saturating vapour pressure of about 5 x 10$^5$ to 35 x 10$^5$ Pa, at a temperature of about 10 to 50°C, **characterized in that** said composition is composed of a propane-nitrogen or propane-ethane mix.

**2.** Process for supplying fuel to a propulsion unit by pressurising said fuel contained in a tank, said process comprising:

- a step to fill a first part (13) of the supply tank (1) with fuel,
- a step to fill a second part (11) of the supply tank (1) with a pressurising composition composed of a system partly in liquid form with a saturating vapour pressure of about 5 x 10$^5$ to 35 x 10$^5$ Pa, at a temperature of about 10 to 50°C, and
- a step to expel the fuel from the first part (13) of the tank (1) under the impulse of the pressure of said pressurisation composition,

the first (13) and second (11) parts of the tank (1) being separated in a leaktight manner by a membrane (9) that transmits pressure from the pressurisation composition to the fuel, without any exchange of materials, **characterized in that** said composition is composed of a propane-nitrogen or propane-ethane mix.

3. Tank (1) used to supply fuel to a propulsion unit, that can be used to supply fuel to this propulsion unit by pressurisation of said fuel using a pressurisation composition, said supply tank comprising:

- a tank (1),
- a membrane (9) separating the tank into a first part (13) and a second part (11), said membrane (9) being chosen from among a membrane made of ethylene propylene terpolymer, a nitrile membrane, a rubber membrane and a metallic membrane,
- said second part (11) being filled with a pressurising composition composed of a system partly in liquid form with a saturating vapour pressure of about $5 \times 10^5$ to $35 \times 10^5$ Pa, at a temperature of about 10 to 50°C,
- means (33, 31) of filling the first part (13) of the tank with fuel to be pressurised and of filling the second part (11) of the tank with the pressurising composition composed of a system partly in liquid form with a saturating vapour pressure of about $5 \times 10^5$ to $35 \times 10^5$ Pa, at a temperature of about 10 to 50°C,
- a means of expelling the fuel from the first part (13) of the tank (1) under the impulse of the pressure applied by said pressurisation composition present in the second part (11) of the tank, and
- control means (21) for regulating the emptying fuel flow,
the membrane (9) transmitting the pressure from the pressurisation composition to the fuel, without any exchange of materials, **characterized in that** said composition is composed of a propane-nitrogen or propane-ethane mix.

## Patentansprüche

1. Verwendung einer Zusammensetzung - gebildet durch ein teilweise flüssiges System mit einem Sättigungsdampfdruck von ungefähr $5 \times 10^5$ bis $35 \times 10^5$ Pa bei einer Umgebungstemperatur von ungefähr 10 bis 50°C, -, zur Druckbeaufschlagung eines Treibstoflantrieb-Versorgungsbehälters (1),
**dadurch gekennzeichnet, dass** diese Zusammensetzung durch ein Propan-Stickstoff- oder Propan-Ethan-Gemisch gebildet wird.

2. Verfahren zur Versorgung eines Antriebs mit Treibstoff durch Druckbeaufschlagung des genannten in einem Behälter enthaltenen Treibstoffs, umfassend:

- einen Schritt zur Befüllung eines ersten Teils (13) des Treibstoffversorgungsbehälters (1),
- einen Schritt zur Befüllung eines zweiten Teils (11) des Treibstofifversorgungsbehälters (1) mit einer Druckbeaufschlagungs-Zusammensetzung, gebildet durch ein teilweise flüssiges System mit einem Sättigungsdampfdruck von ungefähr $5 \times 10^5$ bis $35 \times 10^5$ Pa bei einer Umgebungstemperatur von ungefähr 10 bis 50°C, und
- einen Schritt zum Ausstoßen des Treibstoffs aus dem ersten Teil (13) des Behälters (1) unter dem Impuls des Drucks der genannten Druckbeaufschlagungs-Zusammensetzung, wobei der erste (13) und der zweite (11) Teil des Behälters (1) durch eine dichte Membran (9) getrennt sind, welche die Übertragung des Drucks der Druckbeaufschlagungs-Zusammensetzung auf den Treibstoff ermöglicht, ohne Stoffaustausche,

**dadurch gekennzeichnet, dass** die genannte Zusammensetzung durch ein Propan-Stickstoff- oder Propan-Ethan-Gemisch gebildet wird.

3. Versorgungsbehälter (1) für einen Treibstoffantrieb, verwendbar zur Versorgung des Antriebs durch Druckbeaufschlagung des Treibstoffs mittels einer Druckbeaufschlagungs-Zusammensetzung, wobei der genannte Versorgungsbehälter umfasst:

- einen Behälter (1),
- eine Membran (9), die den Behälter in einen ersten (13) und in einen zweiten (11) Teil unterteilt, wobei die genannte Membran (9) ausgewählt wird unter einer Ethylen-Propylen-Terpolymer-, einer Nitril-, einer Kautschuk- und einer metallischen Membran,
- den genannten zweiten Teil (11), gefüllt mit einer Druckbeaufschlagungs-Zusammensetzung, gebildet durch ein teilweise flüssiges System mit einem Sättigungsdampfdruck von ungefähr $5 \times 10^5$ bis $35 \times 10^5$ Pa bei einer Umgebungstemperatur von ungefähr 10 bis 50°C,
- Einrichtungen (33, 31) zur Befüllung des druckbeaufschlagten ersten Teils (13) des Behälters mit Treibstoff und des zweiten Teils (11) des Behälters mit der Druckbeaufschlagungs-Zusammensetzung, gebildet durch ein teilweise flüssiges System mit einem Sättigungsdampfdruck von ungefähr $5 \times 10^5$ bis $35 \times 10^5$ Pa bei einer Umgebungstemperatur von ungefähr 10 bis 50°C,
- eine Einrichtung zum Ausstoßen des Treibstoffs aus dem ersten Teil (13) des Speichers (1) unter dem Impuls des Drucks der genannten in dem zweiten Teil (11) des Speichers (1) enthaltenen Druckbeaufschlagungs-Zusammensetzung, und
- Steuereinrichtungen (21) zur Regulierung der Treibstoffentleerung,

wobei die Membran (9) die Übertragung des Drucks der Druckbeaufschlagungs-Zusammensetzung auf den Treibstoff ermöglicht, ohne Stoffaustausche,
**dadurch gekennzeichnet, dass** die genannte Zusammensetzung durch ein Propan-Stickstoff- oder Propan-Ethan-Gemisch gebildet wird.

FIG. 1

EP 1 319 123 B1

FIG. 2

FIG. 3

$P(\times 10^5 \, Pa)$

FIG. 4

$P(\times 10^5 Pa)$

FIG. 5

FIG. 6

FIG. 7

FIG. 8

FIG. 9

FIG. 10

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026259 A
- US 5636513 A
- GB 2051246 A
- US 5961074 A